# EUROPÄISCHE PATENTSCHRIFT

(11) **EP 4 498 039 B1**
(45) Veröffentlichungstag und Bekanntmachung des Hinweises auf die Patenterteilung: **02.09.2026**
(21) Anmeldenummer: 23187569.1
(22) Anmeldetag: 25.07.2023
(51) Int. Cl.: G01C 21/20, B66F 9/075, G01C 21/36, G01S 17/89, G06V 20/56, G05D 1/246

(54) **VERFAHREN ZUM FILTERN VON EINGABEN AN EIN LOKALISIERUNGSVERFAHREN EINES AUTONOMEN FAHRZEUGS**
METHOD FOR FILTERING INPUT TO A LOCALIZATION METHOD OF AN AUTONOMOUS VEHICLE
PROCÉDÉ DE FILTRAGE D'ENTRÉES AU NIVEAU D'UN PROCÉDÉ DE LOCALISATION D'UN VÉHICULE AUTONOME

(43) Veröffentlichungstag der Anmeldung: 29.01.2025
(73) Patentinhaber: Jungheinrich Aktiengesellschaft, 22047 Hamburg (DE)
(72) Erfinder: Gathmann, Hauke, 81549 München (DE); Schradick, Dennis, 81675 München (DE); Stähr, Max, 81669 München (DE)
(74) Vertreter: Weickmann & Weickmann PartmbB

(56) Entgegenhaltungen:
- US-A1- 2018 306 587
- US-A1- 2020 401 817

## Beschreibung

Die vorliegende Erfindung betrifft ein Verfahren zum Filtern von Eingaben an ein Lokalisierungsverfahren eines autonomen Fahrzeugs in einer Betriebsumgebung, ein entsprechendes Lokalisierungsverfahren sowie ein autonomes Flurförderzeug, dessen Steuereinheit dazu eingerichtet ist, ein derartiges Filterverfahren durchzuführen.

Im Bereich der Logistik sind in jüngerer Zeit verstärkt autonome Fahrzeuge zum Einsatz gekommen, die anhand von vorgegebenen Arbeitsaufträgen Bewegungen in einer Betriebsumgebung durchführen und hierbei Lasten transportieren können. Um derartige Aufgaben erfüllen zu können, ist es notwendig, den momentanen Aufenthaltsort derartiger Fahrzeuge mit einer hohen Präzision zu kennen, nicht nur, um Aufnahme- und Übergabepositionen für die zu transportierenden Lasten zuverlässig anfahren zu können, sondern auch, um beispielsweise unerwünschte Wechselwirkungen und insbesondere Kollisionen mit in der Betriebsumgebung vorliegenden Hindernissen von vornherein ausschließen zu können.

Neben dem Einsatz von Positionsbestimmungsvorrichtungen, die es beispielsweise über eine Triangulation von Transmittersignalen oder auf Grundlage von in der Betriebsumgebung positionierten Markern derartigen Fahrzeuge erlauben, ihre eigene Position festzustellen, sind alternativ Lokalisierungsstrategien bekannt geworden, in welchen mittels geeigneter Sensoreinheiten Aufnahmen der Umgebung der Fahrzeuge genommen und mit einer vordefinierten Karte verglichen werden, wobei durch einen Abgleich der Sensordaten und der Kartendaten mit hoher Präzision eine Lokalisierung der Fahrzeuge mittels einer Mustererkennung vorgenommen werden kann. Dementsprechend werden in derartigen Anwendungsfällen Lokalisierungen auf bestehenden statischen Karten vorgenommen, wobei für einen zuverlässigen Betrieb mit hoher Präzision sowohl eine hohe Frequenz derartiger Lokalisierungsvorgänge als auch die Aufnahme einer hohen Zahl von Sensordaten beziehungsweise eine hohe Granularität der Aufnahmen der Umgebung gewünscht wird. Durch die entsprechend hohe Anzahl von Datenpunkten sind derartige Lokalisierungsverfahren relativ rechenintensiv, was durch die gewünschte hohe Frequenz derartiger Verfahren weiter verstärkt wird.

Zudem können unter gewissen Umständen fehlerhafte Messungen beziehungsweise Erfassungen von Objekten bei der Aufnahme der Umgebung stattfinden, insbesondere wenn eine der Erfassungsvorrichtungen eines solchen Fahrzeugs in Richtung des Untergrunds gekippt ist, beispielsweise aufgrund eines Überfahrens einer Bodenunebenheit, sodass hier der Fahruntergrund selbst erfasst werden würde und demzufolge als Umgebungsmerkmal interpretiert würde, das mit der angesprochenen Belegungskarte abgeglichen werden müsste. Hierdurch würde nicht nur der ohnehin bereits hohe Rechenbedarf noch einmal drastisch weiter erhöht werden, es bestünde ferner zudem die Gefahr, dass durch derartige fehlerhafte Messungen eine Lokalisierung des Fahrzeugs erschwert oder gar unmöglich werden

Das Dokument US2020/401817 A1 offenbart ein Verfahren zum Filtern von Eingaben an ein Lokalisierungsverfahren eines autonomen Fahrzeugs in einer durch eine Belegungskarte repräsentierten Betriebsumgebung.

Das Dokument US2018/306587 A1 offenbart ein Verfahren für einen Abgleich einer anhand von Sensormesswerten erstellten Belegungskarte mit einem vordefinierten CAD Modell im Rahmen eines Lokalisierungsverfahrens für ein autonomes Flurförderzeug.

Es ist demzufolge eine Aufgabe der vorliegenden Erfindung, ein Verfahren zum Filtern von Eingaben an ein derartiges kartenbasiertes Lokalisierungsverfahren bereitzustellen, mittels welchem in einer effizienten Weise fehlerhafte Messwerte aus der Betriebsumgebung um das Fahrzeug herum frühzeitig verworfen werden können, um den nachgeschalteten eigentlichen Lokalisierungsvorgang effizienter und zuverlässiger durchführen zu können.

Zu diesem Zweck und zur Lösung der eben formulierten Aufgabe umfasst ein erfindungsgemäßes Verfahren zum Filtern von Eingaben an ein Lokalisierungsverfahren eines autonomen Fahrzeugs in einer Betriebsumgebung die Schritte eines Bereitstellens einer vordefinierten Belegungskarte, welche bekannte in der Betriebsumgebung vorliegende Objekte repräsentiert, eines Erzeugens einer optimierten Datenstruktur, welche belegte Zellen in einer Darstellung der Belegungskarte in einem Koordinatensystems repräsentiert, eines Erfassens der Betriebsumgebung des Fahrzeugs mittels wenigstens einer Sensoreinheit, welche dazu eingerichtet ist, Objekte in der Betriebsumgebung sowie deren Abstände von dem Fahrzeug zu erfassen, wobei jedem erfassten Objekt ein durch die Sensoreinheit bereitgestellter Messwert in dem Koordinatensystem zugeordnet wird, für jeden Messwert ein Suchen innerhalb eines vorbestimmten Suchradius um den Messwert herum nach einer belegten Zelle in der optimierten Datenstruktur, falls innerhalb des Suchradius eine belegte Zelle gefunden wird, Weitergeben des Messwerts an ein nachfolgendes Lokalisierungsverfahren, und falls innerhalb des Suchradius keine belegte Zelle gefunden wird, Verwerfen des Messwerts.

Dementsprechend kann durch das erfindungsgemäße Verfahren ein effizientes Filtern von durch die wenigstens eine Sensoreinheit bereitgestellten Messwerten in einer derartigen Weise erfolgen, dass Messwerte, welche innerhalb ihres vorbestimmten Suchradius keine belegte Zelle in der die Belegungskarte wiedergebende Datenstruktur aufweisen, nicht an das Lokalisierungsverfahren eingegeben werden, wodurch eine erhebliche Reduktion der zu verarbeitenden Daten sowie eine insgesamt robustere Durchführung des nachgeschalteten Lokalisierungsverfahrens ermöglicht wird. Hierbei sei darauf hingewiesen, dass zu diesem Zweck bereits eine vordefinierte Belegungskarte verwendet wird, welche bereits in einem geeigneten Format bei der für die folgenden Verfahrensschritte verantwortlichen Verarbeitungseinheit vorliegen kann.

Insbesondere kann hierbei das verwendete Koordinatensystem ein globales kartesisches Koordinatensystem der Betriebsumgebung sein, in welchem derartige Belegungskarten und Datenstrukturen in vorteilhafter Weise gehandhabt werden können.

Dementsprechend kann ferner das Zuordnen der Messwerte in dem Koordinatensystem zu den erfassten Objekten ein Transformieren der Messausgaben der wenigstens einen Sensoreinheit in das globale kartesische Koordinatensystem auf Grundlage einer aktuellen Schätzung der Pose des Fahrzeugs umfassen. Um nämlich die üblicherweise in einem Koordinatensystem mit Ursprung im Mittelpunkt des Fahrzeugs gelieferten Sensordaten in Bezug zu der Belegungskarte beziehungsweise der optimierten Datenstruktur setzen zu können, ist notwendig, zunächst einmal eine momentane Position sowie Ausrichtung des Fahrzeugs bezüglich des globalen kartesischen Koordinatensystems zu kennen beziehungsweise abzuschätzen, wobei das Wertepaar aus aktueller Position und aktueller Orientierung des Fahrzeugs als dessen Pose bezeichnet wird. Beispiele für Techniken zur Erstellung einer aktuellen Schätzung der Pose des Fahrzeugs umfassen ein Ausgehen von einer letzten bekannten Pose während eines laufenden Betriebs oder bei einem Wiederaufnehmen eines Betriebs des Fahrzeugs ohne zwischenzeitliche Änderungen der Pose, oder bei einer Inbetriebnahme des Fahrzeugs an einer zunächst unbekannten Position ein Festgelegen der entsprechenden Pose durch Ausgehen von einem entsprechenden Startfeld mit bekannter Pose.

In ähnlicher Weise kann die aktuelle Schätzung der Pose des Fahrzeugs für ein Festlegen des oben bereits angesprochenen Suchradius verwendet werden, indem der Suchradius anhand der aktuellen Schätzung der Pose des Fahrzeugs und einem größten anzunehmenden Fehler festgelegt wird.

Hierbei kann beispielsweise der Suchradius mittels einer Projektion unter Hinzuziehung eines größten anzunehmenden Winkelfehlers und eines größten anzunehmenden Ortsfehlers der geschätzten Pose bezüglich des Abstands zu dem entsprechenden Messwert festgelegt werden. Derartige größte anzunehmende Fehler bezüglich des Winkels und des Ortes der Pose können in verschiedenen datenbasierten Verfahren vor einer Inbetriebnahme des Fahrzeugs bestimmt werden, beispielsweise indem in verschiedenen Testreihen die Abweichungen zwischen einer Navigation mittels einer angesprochenen Sensoreinheit und einer Navigation mittels Markern verglichen werden.

Durch das eben beschriebene Vorgehen zum Festlegen der entsprechenden Suchradien wird für jeden Messwert abhängig von dessen Abstand zu dem Fahrzeug der dem Messwert zugehörige Suchradius jeweils unterschiedlich sein, sodass hier mit hoher Genauigkeit die geometrischen Verhältnisse zwischen der Belegungskarte, dem Fahrzeug und dem entsprechenden Messwert berücksichtigt werden können. Zwar wären im Prinzip auch alternative Varianten des erfindungsgemäßen Verfahrens möglich, in welchen ein entsprechender Suchradius auf eine andere Weise bestimmt wird oder gar von einem festen Wert für einen derartigen Suchradius ausgegangen wird, derartige Varianten würden jedoch zu einem weniger zuverlässigen Verwerfen von fehlerhaften oder unerwünschten Messwerten führen.

Weiterhin sei darauf hingewiesen, dass die optimierte Datenstruktur sich dadurch auszeichnen sollte, dass sie in einer möglichst effizienten Weise ein Überprüfen eines Vorliegens einer belegten Zelle innerhalb des Suchradius um einen entsprechenden Messwert herum erlaubt. Es zeigt sich nämlich, dass eine "brute force"-Methode zum Vergleichen sämtlicher möglicher belegter Zellen beziehungsweise in der Betriebsumgebung vorliegender Objekte der vordefinierten Belegungskarte mit der Position des Messwerts beziehungsweise dessen Suchradius ebenfalls äußerst rechenintensiv sein kann, sofern eine hohe Anzahl von Messwerten beziehungsweise belegten Zellen mit einer hohen Granularität vorliegen, da diese jeweils einzeln miteinander verglichen werden müssten.

Dementsprechend kann die optimierte Datenstruktur beispielsweise ein Suchbaum sein und insbesondere ein k-d-Baum. Derartige Datenstrukturen zeichnen sich dadurch aus, dass sie bereits Abstandsinformationen beziehungsweise Nachbarschaftsinformationen der einzelnen Einträge enthalten, was sie dazu eignet, eine Überprüfung eines Vorliegens einer belegten Zelle innerhalb des Suchradius um jeden Messwert herum deutlich zu vereinfachen beziehungsweise den entsprechenden Rechenaufwand deutlich zu reduzieren. Somit kann auch bei einer hohen Anzahl von zu untersuchenden Messwerten und einer hohen Frequenz des nachgeschalteten Lokalisierungsverfahrens mit relativ geringem zusätzlichem Rechenaufwand das erfindungsgemäße Verfahren zum Filtern der Eingaben an das Lokalisierungsverfahren zuverlässig durchgeführt werden, wobei die durch in dem nachgeschalteten Lokalisierungsverfahren erzielten Einsparungen hinsichtlich Rechenaufwand den Aufwand zum Durchführen des Filterverfahrens deutlich überwiegen und gleichzeitig die Präzision des Lokalisierungsverfahrens erhöht werden kann.

Dementsprechend betrifft die vorliegende Erfindung gemäß einem weiteren Aspekt ferner ein Lokalisierungsverfahren eines autonomen Fahrzeugs in einer Betriebsumgebung anhand eines Vergleichs von Sensordaten wenigstens einer Sensoreinheit des Fahrzeugs mit einer vordefinierten Belegungskarte der Betriebsumgebung zur Ermittlung einer aktuellen Pose des Fahrzeugs, wobei die Sensordaten vor dem Durchführen der Lokalisierung mittels eines Verfahrens der eben beschriebenen Art gefiltert werden.

Zudem betrifft die vorliegende Erfindung gemäß einem weiteren Aspekt ein autonomes Flurförderzeug, umfassend wenigstens eine Sensoreinheit, welche dazu eingerichtet ist, Objekte in der Betriebsumgebung des Flurförderzeugs sowie deren Abstände zu dem Flurförderzeug zu erfassen, und eine mit der wenigstens einen Sensoreinheit gekoppelte Steuereinheit, wobei die Steuereinheit dazu eingerichtet ist, auf Grundlage einer zur Verfügung gestellten Belegungskarte und von der wenigstens einen Sensoreinheit gelieferten Sensordaten das entsprechende erfindungsgemäße Filterverfahren auszuführen.

Ferner kann die Steuereinheit ebenfalls dazu eingerichtet sein, anhand der aus dem Verfahren weitergebenen Messwerte und der Belegungskarte ein Lokalisierungsverfahren zu einem Bestimmen einer momentanen Pose des Flurförderzeugs durchzuführen.

Während zunächst einmal unterschiedliche Ausführungsformen von Sensoreinheiten in dem erfindungsgemäßen Flurförderzeug denkbar wären, sofern sie in der Lage sind, Objekte in der Betriebsumgebung des Flurförderzeugs sowie deren Abstände zu erfassen, also beispielsweise auch 3D-Kameras oder ähnliche Vorrichtungen, so kann erfindungsgemäß die wenigstens eine Sensoreinheit insbesondere durch einen 2D-Laserscanner gebildet sein.

Derartige Laserscanner überstreichen auf einer vordefinierten Scanebene ihren Scanbereich in periodischer Weise und liefern bei einem erfassten Objekt unter einem bestimmten Winkel zugehörige Abstandsdaten, die sich in geeigneter Weise in beliebige Koordinatensysteme transferieren lassen. Hierbei sind die entsprechenden Scanebenen in der Regel relativ knapp über dem Fahruntergrund liegend parallel zu diesem ausgerichtet.

Hierbei kann die Steuereinheit dazu eingerichtet sein, das erfindungsgemäße Verfahren bei einer Frequenz von wenigstens 20 Hz, vorzugsweise wenigstens 50 Hz durchzuführen, um stets zuverlässige Eingabedaten an einen nachgeschalteten Lokalisierungsalgorithmus weitergeben zu können, der entsprechend mit einer gleichen Frequenz durchgeführt werden kann. Hierbei ist eine möglichst hohe Frequenz dieses Lokalisierungsalgorithmus wünschenswert, um auch bei hohen Geschwindigkeiten des erfindungsgemäßen Flurförderzeugs dessen momentane Pose jeweils mit einer hohen Präzision bestimmen zu können.

Wenngleich die vorliegende Erfindung prinzipiell zunächst einmal auf beliebige Bauformen von Flurförderzeugen anwendbar ist, so kann das Flurförderzeug insbesondere als ein Unterfahr-Shuttle ausgeführt sein und die Sensorebene der wenigstens einen Sensoreinheit kann höchstens 15 cm über einem Fahruntergrund verlaufen. Die besondere Eignung des erfindungsgemäßen Verfahrens für derartige Fahrzeuge besteht darin, dass bei solchen Unterfahr-Shuttles mit ihrer funktionsbedingt niedrigen Bauhöhe und dementsprechend niedrig angeordneten Scanebene bereits bei kleinen Kippwinkeln des Fahrzeugkörpers Situationen eintreten können, in welchen die Scanebene in den Fahruntergrund hineinragt und dementsprechend in einem derartigen Bereich in fehlerhafter Weise Objekte festgestellt würden, welche nicht in der Belegungskarte enthalten sind und somit die Lokalisierung des Fahrzeugs deutlich erschweren würden. Ebenfalls sind derart niedrig angeordnete Sensoren besonders anfällig für Reflexionen an dem Fahruntergrund, die in ähnlicher Weise fehlerhafte Messwerte liefern können und mit dem erfindungsgemäßen Filterverfahren in effizienter Weise verworfen werden können.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Fig. 1: eine schematische Darstellung eines Betriebszustand eines erfindungsgemäßen Fahrzeugs in einer Betriebsumgebung während eines Durchführens eines erfindungsgemäßen Verfahrens in Draufsicht;
- Fig. 2: eine schematisches Schaubild zur Verdeutlichung der Bestimmung eines Suchradius in dem entsprechenden Verfahren; und
- Fig. 3: ein Flussdiagramm zur Erläuterung des erfindungsgemäßen Verfahrens.

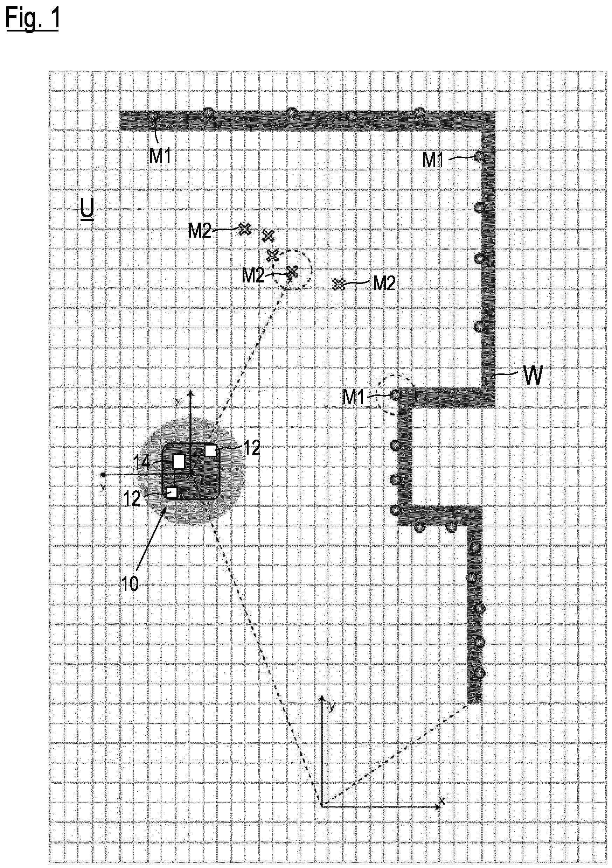

In Figur 1 ist zunächst in einer schematischen Draufsicht ein erfindungsgemäßes Flurförderzeug 10 schematisch dargestellt, welches in Form eines Unterfahr-Shuttles ausführt ist und sich in einer Betriebsumgebung U befindet, in welcher es unterschiedliche Betriebsaufträge ausführen kann, beispielsweise einen Transport von Objekten zwischen hier nicht dargestellten Übergabestationen.

Das Unterfahr-Shuttle 10 weist eine relativ niedrige Bauhöhe sowie einen in Draufsicht annähernd quadratischen Umriss auf und ist mit einer Mehrzahl von als 2D-Laserscannern ausgeführten Sensoreinheiten 12 zur Erfassung von Objekten in seiner Umgebung sowie einer mit den Sensoreinheiten 12 gekoppelten Steuereinheit 14 ausgerüstet. Hierbei erlauben die Sensoreinheiten 12 aufgrund ihrer jeweiligen Scanbereiche und ihrer Anordnung an dem Fahrzeug 10 eine Rundumerfassung der Umgebung des Fahrzeugs 10 über volle 360°.

Wie sich aus Figur 1 weiter ergibt, befindet sich das Fahrzeug 10 momentan in der bereits erwähnten Betriebsumgebung U, die durch eine Wand W begrenzt ist. Hierbei ist der Umgebung U ein globales kartesisches Koordinatensystem zugeordnet, welches durch entsprechende Koordinatenachsen in Figur 1 angedeutet ist, wobei die für das erfindungsgemäße Verfahren zu betrachtende Fläche gemäß dem ebenfalls dargestellten Gittermuster in eine Vielzahl von (virtuellen) Zellen unterteilt ist. Dem Fahrzeug kann selbst ebenfalls ein Koordinatensystem zugeordnet sein, wie in Figur 1 angedeutet, da Messwerte der Sensoreinheiten 12 zunächst einmal bezogen auf die eigene Position und Orientierung des Fahrzeugs 10 zu interpretieren sind.

Dem Fahrzeug 10 und insbesondere seiner Steuereinheit 14 liegt ferner eine Belegungskarte auf Grundlage dieses Gitters vor, welche bekannte in der Betriebsumgebung U vorliegende Objekte und im vorliegenden Fall dementsprechend die Wand W repräsentiert und die entsprechenden Zellen des Gitters als belegt oder nicht belegt klassifiziert. Auf Grundlage der von den Sensoreinheiten 12 gelieferten Daten hinsichtlich jeweiliger Abstände zu erfassten Objekten abhängig vom momentanen Erfassungswinkel und durch einen Vergleich damit mit der in der Belegungskarte kodierten Wand W ist es dem Fahrzeug möglich, eine Lokalisierung innerhalb der Betriebsumgebung U und insbesondere eine Ermittlung der eigenen Pose, d.h. der Position und Ausrichtung des Fahrzeugs 10 vorzunehmen.

Zu diesem Zweck sind in Figur 1 zahlreiche Messwerte verdeutlicht, wobei einige Beispiele der tatsächlich im näheren Umfeld der Wand liegenden, durch Punkte symbolisierten Messwerte mit M1 bezeichnet sind, während weitere Beispiele von zusätzlichen fehlerhaften, durch Kreuze symbolisierten Messwerten mit M2 bezeichnet sind. Hierbei kann die Ansammlung von fehlerhaften Messwerten M2 beispielsweise durch Reflexionen am Fahruntergrund oder eine Unebenheit dieses Untergrunds bedingt sein, wobei eine derartige Unebenheit beispielsweise bei einem Überfahren davon durch das Fahrzeug 10 dazu führen kann, dass die entsprechenden Sensoreinheiten 12 in Richtung des Untergrunds in einer bestimmten Richtung gekippt werden und diesen dementsprechend als Hindernis oder Objekt klassifizieren können, sobald die entsprechende Scanebene den Fahruntergrund schneidet.

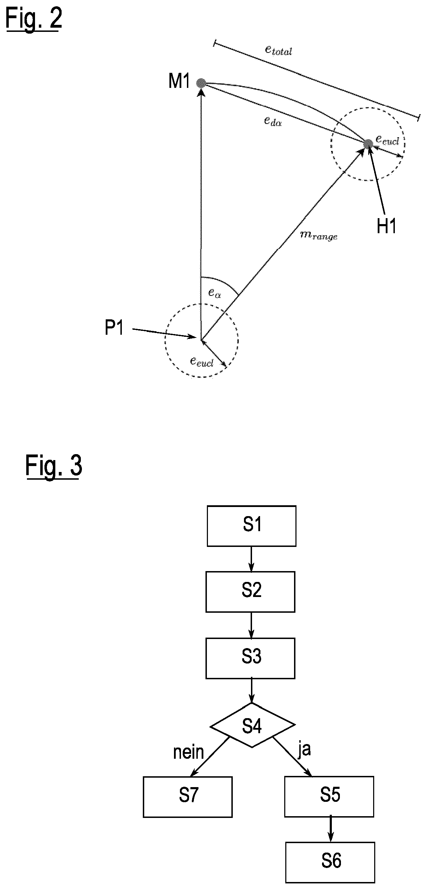

Um nun die hier als fehlerhaft bezeichneten Messwerte M2 bereits vor dem Durchführen des angesprochenen Lokalisierungsverfahrens herauszufiltern bzw. zu verwerfen, führt das Fahrzeug 10 mit Hilfe seiner Steuereinheit 14 ein erfindungsgemäßes Filterverfahren durch, in welchem für jeden der Messwerte M1 und M2 in der hier zur Verfügung stehenden Belegungskarte beziehungsweise einer darauf basierenden optimierten Datenstruktur eine Suche nach belegten Zellen vorgenommen wird, wobei ebenfalls eine Schätzung der aktuellen Pose des Fahrzeugs 10 zugrunde gelegt wird. Dieses Verfahren wird weiter unten im Zusammenhang mit dem Flussdiagramm aus Figur 3 noch detaillierter erläutert werden, wobei sich hierbei ergeben wird, dass innerhalb der entsprechenden, in einigen Beispielen durch gestrichelte Kreise in Figur 1 dargestellten Suchradien um die Messwerte M1 herum jeweils wenigstens eine belegte Zellen vorliegt, da sich in ihrer Umgebung die in der Belegungskarte kodierte Wand W befindet, während für die fehlerhaften Messwerte M2 keine belegte Zelle in ihrer Umgebung und insbesondere innerhalb des entsprechenden Suchradius aufgefunden wird, da sie weit von der Wand W beabstandet sind und auch ansonsten keine Objekte in ihrer Umgebung in der Belegungskarte vorliegen.

Durch dieses Filtern der aufgenommenen Messwerte M1 und M2 und indem lediglich die verifizierten Messwerte M1 an ein nachgeschaltetes Lokalisierungsverfahren weitergegeben werden, kann eine erhebliche Verbesserung der Effizienz sowie der Zuverlässigkeit dieses Lokalisierungsverfahrens erzielt werden, wodurch der zusätzliche Berechnungsaufwand für das eben beschriebene Filterverfahren mehr aus ausgeglichen wird.

Unter Bezugnahme auf Figur 2 soll nun ferner erläutert sein, wie der jeweilige Suchradius für jeden der Messwerte M1 und M2 festgelegt wird. Hierzu wird von einer aktuell geschätzten Position P1 sowie einer aktuell geschätzten Orientierung des Fahrzeugs 10 in der Betriebsumgebung U bezogen auf das globale Koordinatensystem ausgegangen, welche gemeinschaftlich eine aktuelle Schätzung der Pose des Fahrzeugs 10 darstellen. Aufgrund früher durchgeführter datenbasierter Verfahren kann ferner ein größter anzunehmender Ortsfehler beziehungsweise ein größter anzunehmender Winkelfehler der entsprechend geschätzten Pose festgelegt sein, der beispielsweise durch Vergleichsreihen von mittels einer Lasernavigation der hier beschriebenen Art und einer Markernavigation bestimmt worden ist.

Um nun den entsprechenden Suchradius eines der Messpunkte M1 unter Annahme der größten anzunehmenden Fehler für Ort und Winkel der Pose zu bestimmen, wird einerseits ausgehend von dem hier betrachteten Messpunkt M1 unter Berücksichtigung des größten anzunehmenden Winkelfehlers e_{α} zunächst einmal ein auf einem Kreis mit der Position P1 als Mittelpunkt liegender Hilfspunkt H1 konstruiert, dessen Abstand e_{dα} (Kreissehne) von dem Messpunkt M1 von dem Abstand des Messwerts M1 zu der Position P1 abhängt, welcher an dieser Stelle mit m_{range} bezeichnet wird.

Zusätzlich zu diesem Abstand e_{dα} zwischen dem Messwert M1 und dem Hilfspunkt H1 wird in Verlängerung zu diesem Abstand noch der größte anzunehmende Ortsfehler e_{eucl} zugeschlagen, wodurch sich der hier mit eₜₒₜₐₗ bezeichnete Suchradius um den Messwert M1 herum ergibt, innerhalb welchem nach dem oben beschriebenen Prinzip die Belegungskarte nach belegten Zellen zu durchsuchen ist. Hierbei sind in Figur 2 die entsprechenden größten anzunehmenden Fehler nicht als maßstabsgetreu zu verstehen, es hat sich bei Ermittlung entsprechender Abweichungen in experimentellen Testreihen ergeben, dass sich der größte anzunehmende Winkelfehler in der Regel im Bereich von etwa 1 ° oder darunter befinden wird, während für den Ortsfehler Werte von etwa 10 cm oder weniger typisch sind.

Auf dieser Grundlage kann somit für jeden der Messwerte M1 beziehungsweise M2 aus Figur 1 ein individueller Suchradius auf Grundlage der geschätzten Pose des Fahrzeugs 10 sowie der vorgegebenen größten anzunehmenden Fehler des Ortes e_{eucl} beziehungsweise Winkels e_{α} bestimmt werden, woraufhin dann ein Abgleich mit den in der Belegungskarte vorliegenden Objekten innerhalb des sich ergebenden Suchradius eₜₒₜₐₗ durchgeführt werden kann.

Zur Verdeutlichung des hierzu durchzuführenden Verfahrens sei zuletzt auf die Figur 3 verwiesen, in welcher zunächst einmal in einem ersten Schritt S1 die vordefinierte Belegungskarte der Betriebsumgebung U an das Fahrzeug 10 eingegeben wird, die beispielsweise zuvor mittels üblicher Vermessungsverfahren der Umgebung U in einem iterativen Prozess erstellt werden kann und zunächst einmal als statisch angenommen wird, so lange keine Änderungen an der Betriebsumgebung U vorgenommen werden, die eine erneute Eingabe einer entsprechenden modifizierten Belegungskarte an das Fahrzeug 10 erfordern würden. Die Bereitstellung dieser Karte erfolgt dementsprechend lediglich ein einzelnes Mal, während die nachfolgend beschriebenen Verfahrensschritte mit hoher Frequenz durchgeführt werden, beispielsweise 20 Hz oder 50 Hz.

Zunächst erzeugt hierzu das Fahrzeug 10 mittels seiner Steuereinheit 14 in Schritt S2 eine optimierte Datenstruktur aus der Belegungskarte, wobei die optimierte Datenstruktur belegte Zellen in einer Darstellung der Belegungskarte in einem Koordinatensystem und insbesondere dem globalen kartesischen Koordinatensystem der Betriebsumgebung U repräsentiert, beispielsweise in Form eines Suchbaums und insbesondere in Form eines k-d-Baums, wobei entsprechende Algorithmen zur Erstellung einer derartige Datenstruktur aus einer Belegungskarte bekannt und effizient zu implementieren sind.

Nachfolgend oder parallel hierzu erfasst das Fahrzeug 10 in Schritt S3 mittels seiner Sensoreinheiten 12 die Betriebsumgebung U und ermittelt demzufolge die oben bereits angesprochenen Messwerte M1 und M2, die jeweils räumlichen Koordinaten entsprechen, in denen Objekte erfasst worden sind. Nachdem somit entsprechende Messwerte in dem von der optimierten Datenstruktur ebenfalls verwendeten Koordinatensystem erzeugt worden sind, was beispielsweise eine Koordinatentransformation zwischen einem Bezugssystem des Fahrzeugs 10 und dem globalen kartesischen Koordinatensystem auf Grundlage einer aktuellen Schätzung der Pose des Fahrzeugs 10 erfordern kann, wird in Schritt S4 für jeden der Messwerte M1 und M2 innerhalb des in Zusammenhang mit Figur 2 erläuterten bestimmten Suchradius in der optimierten Datenstruktur nach einer belegten Zelle gesucht.

Stellt sich nun bei dieser Suche heraus, dass innerhalb des Suchradius eine belegte Zelle gefunden wird ("ja" in Schritt S4), so wird in einem Schritt S5 der entsprechende Messwert an ein nachfolgendes Lokalisierungsverfahren weitergegeben, welches in Schritt S6 auf Grundlage sämtlicher akzeptierter Messwerte, die am Schritt S5 ausgegeben werden, eine Lokalisierung der aktuellen Pose des Fahrzeugs 10 durch einen Vergleich mit der Belegungskarte durch ein Mustererkennungsverfahren vornimmt.

Wird dem hingegen in Schritt S4 festgestellt, dass innerhalb des Suchradius keine belegte Zelle gefunden wird ("nein" in Schritt S4), so wird in Schritt S7 der entsprechende Messwert verworfen und somit nicht als Eingabe an das Lokalisierungsverfahren in S6 eingegeben.

Dementsprechend wird durch das Durchführen des erfindungsgemäßen Verfahrens eine Eingabe von fehlerhaften beziehungsweise nicht mit einer Belegungskarte konsistenten Messwerten an ein nachfolgendes Lokalisierungsverfahren sichergestellt, sodass dieses effizient und zuverlässig durchgeführt werden kann. Durch die Verwendung eines entsprechenden Suchbaums und insbesondere eines k-d-Baums im Rahmen der Suche nach belegten Zellen innerhalb des Suchradius jedes Messwerts kann ferner eine äußerst effiziente Ausführung des erfindungsgemäßen Filterverfahrens erzielt werden.

## Patentansprüche

1. Verfahren zum Filtern von Eingaben an ein Lokalisierungsverfahren eines autonomen Fahrzeugs (10) in einer Betriebsumgebung (U), umfassend die Schritte:
- Bereitstellen (S1) einer vordefinierten Belegungskarte, welche bekannte in der Betriebsumgebung (U) vorliegende Objekte (W) repräsentiert;
- Erzeugen (S2) einer optimierten Datenstruktur, welche belegte Zellen in einer Darstellung der Belegungskarte in einem Koordinatensystem repräsentiert;
- Erfassen (S3) der Betriebsumgebung (U) des Fahrzeugs (10) mittels wenigstens einer Sensoreinheit (12), welche dazu eingerichtet ist, Objekte in der Betriebsumgebung (U) sowie deren Abstände von dem Fahrzeug (10) zu erfassen, wobei jedem erfassten Objekt ein durch die Sensoreinheit (12) bereitgestellter Messwert (M1, M2) in dem Koordinatensystem zugeordnet wird;
- für jeden Messwert (M1, M2), Suchen (S4) innerhalb eines Suchradius (eₜₒₜₐₗ) um den Messwert (M1, M2) herum nach einer belegten Zelle in der optimierten Datenstruktur;
- falls innerhalb des Suchradius (eₜₒₜₐₗ) eine belegte Zelle gefunden wird: Weitergeben des Messwerts (M1) an ein nachfolgendes Lokalisierungsverfahren; und
- falls innerhalb des Suchradius (eₜₒₜₐₗ) keine belegte Zelle gefunden wird: Verwerfen des Messwerts (M2).

2. Verfahren nach Anspruch 1,
wobei das Koordinatensystem ein globales kartesisches Koordinatensystem ist.

3. Verfahren nach Anspruch 2,
wobei das Zuordnen der Messwerte (M1, M2) in dem Koordinatensystem zu den erfassten Objekten ein Transformieren der Messausgaben der wenigstens einen Sensoreinheit (12) in das globale kartesische Koordinatensystem auf Grundlage einer aktuellen Schätzung der Pose des Fahrzeugs (10) umfasst.

4. Verfahren nach einem der vorhergehenden Ansprüche,
wobei der Suchradius (eₜₒₜₐₗ) festgelegt wird anhand einer aktuellen Schätzung der Pose des Fahrzeugs (10) und einem größten anzunehmenden Fehler (e_{α}, e_{eucl}).

5. Verfahren nach Anspruch 4,
wobei der Suchradius (eₜₒₜₐₗ) mittels einer Projektion eines größten anzunehmenden Winkelfehlers (e_{α}) und eines größten anzunehmenden Ortsfehlers (e_{eucl}) der Pose bezüglich des Abstands (m_{range}) zu dem entsprechenden Messwert (M1, M2) festgelegt wird.

6. Verfahren nach einem der vorhergehenden Ansprüche,
wobei die optimierte Datenstruktur ein Suchbaum ist, insbesondere ein k-d-Baum.

7. Lokalisierungsverfahren eines autonomen Fahrzeugs (10) in einer Betriebsumgebung (U) anhand eines Vergleichs von Sensordaten wenigstens einer Sensoreinheit (12) des Fahrzeugs (14) mit einer vordefinierten Belegungskarte der Betriebsumgebung (U), wobei die Sensordaten vor dem Durchführen der Lokalisierung mittels eines Verfahrens nach einem der vorhergehenden Ansprüche gefiltert werden.

8. Autonomes Flurförderzeug (10), umfassend:
- wenigstens eine Sensoreinheit (12), welche dazu eingerichtet ist, Objekte in der Betriebsumgebung (U) des Flurförderzeugs (10) sowie deren Abstände zu dem Flurförderzeug (10) zu erfassen,
- eine mit der wenigstens einen Sensoreinheit (12) gekoppelte Steuereinheit (14),
wobei die Steuereinheit (14) dazu eingerichtet ist, auf Grundlage einer zur Verfügung gestellten Belegungskarte und von der wenigstens einen Sensoreinheit (12) gelieferten Sensordaten ein Verfahren nach einem der Ansprüche 1 bis 6 auszuführen.

9. Flurförderzeug (10) nach dem vorhergehenden Anspruch,
wobei die Steuereinheit (14) ferner dazu eingerichtet ist, anhand der aus dem Verfahren weitergebenen Messwerte und der Belegungskarte ein Lokalisierungsverfahren zu einem Bestimmen einer momentanen Pose des Flurförderzeugs (10) durchzuführen.

10. Flurförderzeug (10) nach einem der Ansprüche 8 und 9,
wobei die wenigstens eine Sensoreinheit (12) durch einen 2d-Laserscanner gebildet ist.

11. Flurförderzeug (10) nach einem der Ansprüche 8 bis 10,
wobei die Steuereinheit (14) dazu eingerichtet ist, das Verfahren nach einem der Ansprüche 1 bis 6 bei einer Frequenz von wenigstens 20 Hz, vorzugsweise wenigstens 50 Hz durchzuführen.

12. Flurförderzeug (10) nach einem der Ansprüche 8 bis 11,
wobei das Flurförderzeug (10) als ein Unterfahr-Shuttle ausgeführt ist und vorzugsweise eine Sensorebene der wenigstens einen Sensoreinheit (12) höchstens 15 cm über einem Fahruntergrund verläuft.

## Claims

1. Method for filtering inputs to a localisation process of an autonomous vehicle (10) in an operating environment (U), comprising the steps:
- providing (S1) a predefined occupancy map which represents known objects (W) present in the operating environment (U);
- generating (S2) an optimised data structure which represents occupied cells in a representation of the occupancy map in a coordinate system;
- acquiring (S3) the operating environment (U) of the vehicle (10) by means of at least one sensor unit (12) which is designed to detect objects in the operating environment (U) as well as their distances from the vehicle (10), wherein each detected object is assigned in the coordinate system a measured value (M1, M2) provided by the sensor unit (12);
- for each measured value (M1, M2), carry out a search (S4) within a search radius (eₜₒₜₐₗ) around the measured value (M1, M2) for an occupied cell in the optimised data structure;
- if an occupied cell is found within the search radius (eₜₒₜₐₗ):
transfer the measured value (M1) to a subsequent calibration procedure; and
- if no occupied cell is found within the search radius (eₜₒₜₐₗ): discard the measured value (M2).

2. Method according to claim 1,
wherein the coordinate system is a global Cartesian system.

3. Method according to claim 2,
wherein the assignment of the measured values (M1, M2) in the coordinate system to the detected objects comprises a transformation of the measurement outputs of the at least one sensor unit (12) into the global Cartesian coordinate system based on a current estimate of the pose of the vehicle (10).

4. Method according to any one of the preceding claims,
wherein the search radius (eₜₒₜₐₗ) is determined based on a current estimate of the pose of the vehicle (10) and a maximum acceptable error (eₐ₁, e_{eucl}).

5. Method according to claim 4,
whereby the search radius (eₜₒₜₐₗ) is determined by projecting a maximum acceptable angular error (eₐ) and a maximum acceptable positional error (e_{eucl}) of the pose with respect to the distance (m_{range}) onto the corresponding measured value (M1, M2).

6. Method according to any of the preceding claims,
whereby the optimised data structure is a search tree, in particular a k-d tree.

7. Localisation method of an autonomous vehicle (10) in an operating environment (U) by comparing sensor data from at least one sensor unit (12) of the vehicle (14) with a predefined occupancy map of the operating environment (U), wherein the sensor data are filtered before the localisation is carry out by a method according to any of the preceding claims.

8. Autonomous industrial truck (10), comprising:
- at least one sensor unit (12) which is designed to detect objects in the operating environment (U) of the industrial truck (10) as well as their distances to the industrial truck (10);
- a control unit (14) coupled to the at least one sensor unit (12),
wherein the control unit (14) is designed to carry out a method according to any one of claims 1 to 6 based on an occupancy map that is provided and sensor data that are supplied by the at least one sensor unit (12).

9. Industrial truck (10) according to the preceding claim,
wherein the control unit (14) is furthermore designed to carry out a localisation method to determine a momentary pose of the industrial truck (10) based on the measured values supplied by the method and the occupancy map.

10. Industrial truck (10) according to any one of claims 8 and 9,
wherein the at least one sensor unit (12) is formed by a 2D laser scanner.

11. Industrial truck (10) according to any one of claims 8 to 10,
wherein the control unit (14) is designed to carry out the method according to any one of claims 1 to 6 at a frequency of at least 20 Hz, preferably at least 50 Hz.

12. Industrial truck (10) according to any one of claims 8 to 11,
wherein the industrial truck (10) is designed as an underride shuttle and preferably a sensor plane of the at least one sensor unit (12) extends at least 15 cm above a driving surface.

## Revendications

1. Procédé de filtrage des données d'entrée destinées à un système de localisation d'un véhicule autonome (10) dans un environnement d'exploitation (U), comprenant les étapes consistant à :
- fournir (S1) une carte d'occupation prédéfinie qui représente des objets (W) connus présents dans l'environnement d'exploitation (U) ;
- générer (S2) une structure de données optimisée qui représente les cellules occupées dans une représentation de la carte d'occupation dans un système de coordonnées ;
- détecter (S3) l'environnement d'exploitation (U) du véhicule (10) au moyen d'au moins une unité de détection (12) qui est agencée pour détecter des objets dans l'environnement d'exploitation (U) ainsi que leurs distances par rapport au véhicule (10), où une valeur de mesure (M1, M2), fournie par l'unité de détection (12), dans le système de coordonnées est attribuée à chaque objet détecté ;
- pour chaque valeur de mesure (M1, M2), rechercher (S4) dans un rayon de recherche (eₜₒₜₐₗ) autour de la valeur de mesure (M1, M2) une cellule occupée dans la structure de données optimisée ;
- si une cellule occupée est trouvée à l'intérieur du rayon de recherche (eₜₒₜₐₗ) : transmettre la valeur de mesure (M1) à un procédé de localisation suivant ; et
- si aucune cellule occupée n'est trouvée à l'intérieur du rayon de recherche (eₜₒₜₐₗ) : rejeter la valeur de mesure (M2).

2. Procédé selon la revendication 1,
dans lequel le système de coordonnées est un système de coordonnées cartésiennes global.

3. Procédé selon la revendication 2,
dans lequel l'attribution des valeurs de mesure (M1, M2) dans le système de coordonnées aux objets détectés consiste à transformer les données de sortie de mesure de ladite au moins une unité de détection (12) dans le système de coordonnées cartésiennes global sur la base d'une estimation actuelle de la pose du véhicule (10).

4. Procédé selon l'une des revendications précédentes,
dans lequel le rayon de recherche (eₜₒₜₐₗ) est déterminé à partir d'une estimation actuelle de la pose du véhicule (10) et d'une erreur maximale supposée (e_{α}, e_{eucl}).

5. Procédé selon la revendication 4,
dans lequel le rayon de recherche (eₜₒₜₐₗ) est déterminé au moyen d'une projection d'une erreur angulaire maximale supposée (e_{α}) et d'une erreur de position maximale supposée (e_{eucl}) de la pose par rapport à la distance (m_{range}) à la valeur de mesure correspondante (M1, M2).

6. Procédé selon l'une des revendications précédentes,
dans lequel la structure de données optimisée est un arbre de recherche, en particulier un arbre k-d.

7. Procédé de localisation d'un véhicule autonome (10) dans un environnement d'exploitation (U) sur la base d'une comparaison des données de détection d'au moins une unité de détection (12) du véhicule (14) avec une carte d'occupation prédéfinie de l'environnement d'exploitation (U), les données de détection étant filtrées avant la réalisation de la localisation au moyen d'un procédé selon l'une des revendications précédentes.

8. Chariot de manutention autonome (10), comprenant :
- au moins une unité de détection (12) agencée pour détecter des objets dans l'environnement d'exploitation (U) du chariot de manutention (10) ainsi que leurs distances par rapport au chariot de manutention (10) ;
- une unité de commande (14) couplée à ladite au moins une unité de détection (12),
dans lequel l'unité de commande (14) est agencée pour mettre en œuvre, sur la base d'une carte d'occupation mise à disposition et des données de détection fournies par ladite au moins une unité de détection (12), un procédé selon l'une des revendications 1 à 6.

9. Chariot de manutention (10) selon la revendication précédente,
dans lequel l'unité de commande (14) est en outre agencée pour mettre en œuvre, à l'aide des valeurs de mesure transmises par le procédé et de la carte d'occupation, un procédé de localisation visant à déterminer une pose actuelle du chariot de manutention (10).

10. Chariot de manutention (10) selon l'une des revendications 8 et 9,
dans lequel ladite au moins une unité de détection (12) est constituée d'un scanner laser 2D.

11. Chariot de manutention (10) selon l'une des revendications 8 à 10,
dans lequel l'unité de commande (14) est agencée pour mettre en œuvre le procédé selon l'une des revendications 1 à 6 à une fréquence d'au moins 20 Hz, de préférence d'au moins 50 Hz.

12. Chariot de manutention (10) selon l'une des revendications 8 à 11,
dans lequel le chariot de manutention (10) est conçu comme une navette sous-jacente et, de préférence, un plan de détection de ladite au moins une unité de détection (12) se trouve à 15 cm au maximum au-dessus d'un sol de roulement.
